# EUROPÄISCHE PATENTSCHRIFT

(11) **EP 3 300 088 B1**
(45) Veröffentlichungstag und Bekanntmachung des Hinweises auf die Patenterteilung: **09.03.2022**
(21) Anmeldenummer: 17189353.0
(22) Anmeldetag: 05.09.2017
(51) Int. Cl.: H01C 7/12, H02G 15/064, H01C 1/022

(54) **VERSPANNVORRICHTUNG FÜR EINEN ÜBERSPANNUNGSABLEITER, HERSTELLUNGSVERFAHREN UND ÜBERSPANNUNGSABLEITER**
TENSIONING DEVICE FOR A SURGE ARRESTER, MANUFACTURING METHOD AND SURGE ARRESTER
ELEMENT DE MISE SOUS TENSION MÉCANIQUE POUR UN PARAFOUDRE, SON PROCÉDÉ DE FABRICATION ET PARAFOUDRE L'UTILISANT

(30) Priorität: 27.09.2016 DE 102016218533
(43) Veröffentlichungstag der Anmeldung: 28.03.2018
(73) Patentinhaber: Siemens Energy Global GmbH & Co. KG, 81739 München (DE)
(72) Erfinder: Springborn, Dirk, 12203 Berlin (DE); Steinfeld, Kai, 89518 Heidenheim (DE); Kruska, Bernd, 14059 Berlin (DE)

(56) Entgegenhaltungen:
- FR-A5- 2 052 848
- GB-A- 482 984
- JP-A- 2014 022 632
- US-A- 3 534 989
- US-A1- 2005 208 829
- US-A1- 2013 279 059

## Beschreibung

Die Erfindung betrifft eine Verspannvorrichtung für einen Überspannungsableiter gemäß dem Oberbegriff des Anspruchs 1, ein Herstellungsverfahren nach Anspruch 8 sowie einen Überspannungsableiter nach Anspruch 9.

Überspannungsableiter dienen z.B. in der Hochspannungs- und Mittelspannungstechnik dazu, unzulässige Überspannungen im Fehlerfall auf Erde abzuleiten. Beispielsweise kann mittels eines Überspannungsableiters bei einem Blitzeinschlag in eine Freileitung eine Ableitung des Stromes in die Erde erfolgen, so dass an die Freileitung angeschlossene elektrische Betriebsmittel wie z.B. ein Transformator vor Beschädigungen durch Überspannung geschützt werden.

Aus der Druckschrift DE19940939 C1 ist ein Überspannungsableiter mit einer Ableitsäule aus einer Mehrzahl scheibenförmiger Metalloxid-Halbleiterwiderstände bekannt. Die Metalloxidwiderstände weisen bei einer auf dem Überspannungsablei-ter anliegenden Spannung unterhalb einer bauartbedingten Schwellenspannung einen extrem hohen elektrischen Widerstand auf, so dass im normalen Betrieb nur ein kleiner Leckstrom fließt. Im Fehlerfall wird die Schwellenspannung jedoch überschritten, woraufhin sich der elektrische Widerstand der Widerstände stark verringert, so dass ein hoher Strom zur Erde hin abgeleitet und in Folge die Überspannung reduziert wird. Der Überspannungsableiter weist zwei Endarmaturen auf, zwischen denen die einzelnen scheibenförmigen Metalloxid-Halbleiterwiderstände zur Ableitsäule zusammengepresst werden. Dies geschieht durch Kunststoffstäbe, die außen an der Ableitsäule angeordnet sind und einen Käfig um die Ableitsäule bilden. Zum Festlegen der Stäbe in den Endarmaturen werden Verspannhülsen eingesetzt, die einstückig ausgebildet und konisch, d.h. im Wesentlichen kegelstumpfförmig, geformt sind.

Ferner ist jede Verspannhülse zum konisch zulaufenden Ende hin mit Schlitzen versehen, so dass die Verspannhülse nach Aufsetzen auf einen Stab in eine dafür vorgesehene Vorbohrung auf der Endarmutur festgelegt werden kann. Dafür weist die Endarmatur jeweils eine komplementär zur konischen Ausformung der Verspannhülse geformte Ausnehmung aus, in die der Stab mit der Verspannhülse eingesetzt wird.

Um die Funktion des Verspannmechanismus zu gewährleisten, müssen die konischen Verspannhülsen in den dazu passgenauen Bohrungen auch bei großen Anpresskräften leicht gleiten können. Auch bei recht glatten Oberflächen können die Verspannhülsen beim Festlegen der Stäbe jedoch in den Endarmaturen steckenbleiben, oft sogar unlösbar. Dies hat zur Folge, dass beim Strecken der Stäbe diese aus den Verspannhülsen rutschen und keine ausreichende Verspannung der Ableitsäule erreicht wird. In diesem Fall muss der Ableiter wieder demontiert und mit neuen Endarmaturen und Verspannhülsen neu aufgebaut werden.

Ob die Stäbe in den Endarmaturen korrekt festgelegt werden, wird bisher auf zwei Arten kontrolliert. Zum Einen wird mit einem Schraubenzieher leicht gegen alle Stäbe geklopft. Ist der dabei entstehende Klang bei allen Stäben gleich, so wird von einer ausreichenden Verspannung ausgegangen. Zum Anderen werden die Positionen aller Stäbe vor dem Strecken markiert. Ist nach dem Strecken eine Markierung nicht mehr sichtbar, so ist der Stab in die Verspannhülse gerutscht, d. h. er sitzt nicht fest.

Ein anderer Ansatz ist aus der Druckschrift DE102009007067 A1 bekannt. Es werden keine Verspannhülsen eingesetzt, sondern die Stäbe werden in konisch ausgeformte Ausnehmungen in der Endarmatur eingelegt und mittels eines Keils gespalten, so dass die Stäbe verrutschfest festgelegt sind. Durch ein Weitungsbegrenzungselement, das ringförmig in um den Stab gelegt wird, wird jeweils ein zu tiefes Aufspalten der Stäbe verhindert.

Ferner sind Verspannvorrichtungen für Stäbe in Überspannungsableitern aus den Druckschriften US 2013/0279059 A1 und JP2014-22632 A bekannt.

Ausgehend von bekannten Ansätzen zum Verspannen von Stäben für Überspannungsableiter in Käfig-Bauweise stellt sich an die Erfindung die Aufgabe, eine Verspannvorrichtung anzugeben, die besonders leicht zu montieren ist.

Die Erfindung löst diese Aufgabe durch eine Verspannvorrichtung nach Anspruch 1.

Eine Verspannvorrichtung im Sinne der Erfindung ist eine Hülse zum Verspannen eines Verspannmittels wie z.B. eines Stabes in einer Endarmatur. Als Material für die Verspannvorrichtung kann beispielsweise Aluminium eingesetzt werden. Es ergibt sich der wesentliche Vorteil, dass Ausschuss in der Ableiterherstellung vermieden wird, weil die Ableiter korrekt verspannt werden können und eine Demontage der Ableiter entfällt, falls die Verspannhülsen nicht ordnungsgemäß in die Armatur gerutscht wären. Dies spart Kosten in der Herstellung und bietet einen großen Wettbewerbsvorteil.

In einer bevorzugten Ausführungsform der erfindungsgemäßen Verspannvorrichtung weist die Gleitschicht zumindest anteilig Teflon als Material auf. Dies ist ein Vorteil, weil sich in umfangreichen Versuchsreihen erwiesen hat, dass Teflon besonders gut für die Gleitschicht geeignet ist. Einerseits ist Teflon sehr gleitfähig, andererseits genügt eine sehr dünne Schicht für die Gleitwirkung, was eine formschlüssige Festlegung der Verspannvorrichtung in der Endarmatur begünstigt.

Teflon im Sinne der Erfindung ist ein Kunststoff, der zumindest anteilig aus Polytetrafluorethylen besteht.

In einer weiteren bevorzugten Ausführungsform der erfindungsgemäßen Verspannvorrichtung ist die Gleitschicht durch Umwicklung des konischen Bereichs mit einem Teflonband ausgebildet. Dies ist ein Vorteil, weil ein vorgefertigtes Band aus Teflon oder mit einer Teflonbeschichtung leicht durch eine Maschine oder durch einen Monteur auf die Verspannvorrichtung aufgebracht werden kann.

In einer anderen bevorzugten Ausführungsform der erfindungsgemäßen Verspannvorrichtung weist die Gleitschicht zumindest anteilig ein Öl als Material auf. Dies ist ein Vorteil, weil das Öl kostengünstig und einfach aufzubringen ist. Dabei ist es jedoch wichtig, das Öl nur außen auf der Verspannhülse aufzubringen und keinesfalls in der Ausnehmung für das Verspannmittel, denn dort könnte es zum Herausrutschen des Verspannmittels aus der Verspannvorrichtung führen, wenn die Ableitsäule eingespannt wird. Ferner werden Überspannungsableiter oft mit einem Silikonumguss zur äußeren Isolation versehen. Hierfür ist eine gute Haftung des Silikons auf dem Ableiter notwendig. Das Öl würde einer guten Haftung entgegen wirken und muss daher auf die Innenseiten der Ausnehmungen der Endarmaturen beschränkt bleiben.

In einer weiteren bevorzugten Ausführungsform der erfindungsgemäßen Verspannvorrichtung weist die Gleitschicht einen Lack als Material auf. Dies ist ein Vorteil, weil ein Lack einfach und kostengünstig auftragbar ist und im Vergleich zu einem Öl eine geringere Gefahr des Verschmierens in dafür nicht vorgesehene Bereiche besteht. Auch hier ist es wichtig, dass der Lack bei einem maschinellen Auftrag zwar leicht vollflächig aufgetragen werden kann (z. B. durch Tauchen der Hülse in den Lack), der Lack jedoch nur außen auf die Hülse aufgetragen werden sollte. Um eine größere Genauigkeit zu erreichen, könnte der Lack zwar händisch mit einem Pinsel aufgetragen werden; dies wäre jedoch aufgrund der großen Anzahl an verwendeten Verspannvorrichtungen teuer in der Ausführung.

In einer anderen bevorzugten Ausführungsform der erfindungsgemäßen Verspannvorrichtung weist die Gleitschicht zumindest anteilig ein Material auf, das sich vom Material einer Endarmatur unterscheidet. Typischerweise werden sowohl Endarmaturen als auch Verspannvorrichtungen aus Aluminium gefertigt, weil Aluminium für Druckguss geeignet ist, ein geringes spezifisches Gewicht aufweist und nicht korrodiert. Die Verwendung von Aluminium hat auch den zusätzlichen Nutzen, dass das weiche Aluminium die Kerbwirkung auf den Stab beim Zusammendrücken der Verspannhülse etwas reduziert und so einer Materialschwächung vorbeugt. Wird nun für die Oberfläche der Verspannvorrichtung ein anderes Material als für die Endarmatur eingesetzt, so wird die Gleitwirkung dadurch verbessert, weil ungleiche Materialen gegeneinander typischerweise eine geringere Reibung aufweisen als gleiche Materialien, ein "Festfressen" der Verspannvorrichtung in der Endarmatur wird vermieden. Dabei kann beispielsweise ein Material Aluminium und ein anderes Material Edelstahl sein.

Die Verspannvorrichtung ist mehrstückig ausgebildet. Bei einstückigen Verspannhülsen ist nur das geschlitzte Ende leicht verformbar. Das andere Ende ist recht starr und kann nur durch vergleichsweise größeren Kraftaufwand verformt werden. Hierdurch wird ein hineinrutschen in die korrekte Position in einer Ausnehmung einer Endarmatur erschwert. Wird eine mehrstückige Verspannvorrichtung bzw. Verspannhülse eingesetzt, so kann diese so ausgestaltet sein, dass eine Verformung mit vergleichsweise geringem Kraftaufwand über die komplette Länge möglich ist. Dies ermöglicht eine besonders einfache Verspannung in einer Endarmatur, weil ein Hineinrutschen in die korrekte Position in einer Ausnehmung einer Endarmatur leichtgängig und zuverlässig erfolgt.

Die Stücke sind als Kegelsegmente ausgebildet, die in zusammengesetztem Zustand die axiale Ausnehmung zur Aufnahme eines Verspannmittels und mindestens einen Schlitz in dem konischen Bereich ausbilden, wobei der mindestens eine Schlitz von der Außenfläche des konischen Bereichs bis zur axialen Ausnehmung zur Aufnahme eines Verspannmittels verläuft, und wobei der mindestens eine Schlitz derart gestaltet ist, dass die Begrenzungswande radial federnd beweglich sind. Dabei können zwei oder mehr Stücke eingesetzt werden. Typischerweise werden drei Stücke verwendet, die rotationssymtrisch um die Längsachse der Verspannvorrichtung gruppiert sind und so jeweils Schlitze mit ca. 120° Winkelabstand ausbilden.

Gemäß der erfindungsgemäßen Verspannvorrichtung weist jedes der Kegelsegmente an seinem dem konisch verjüngten Bereich abgewandten Ende jeweils mindestens ein erstes Befestigungsmittel zur Verbindung mit einem benachbarten Kegelsegment auf. Dies ist ein Vorteil, weil so die Kegelsegmente rutschfest gegeneinander festgelegt werden. Dies erleichtert das Einsetzen in die Endarmatur.

In einer weiteren bevorzugten Ausführungsform der erfindungsgemäßen Verspannvorrichtung ist das erste Befestigungsmittel jeweils als ein Vorsprung ausgebildet. Ein Vorsprung i.S.d. Erfindung kann beispielsweise ein Stift oder ein Pin sein, aber auch eine halbkreisförmige Ausstülpung um die axiale Ausnehmung herum.

In einer weiteren bevorzugten Ausführungsform der erfindungsgemäßen Verspannvorrichtung ist bei jedem der Kegelsegmente ein zweites Befestigungsmittel vorgesehen, das als eine Ausnehmung zur Aufnahme eines ersten Befestigungsmittels ausgebildet ist.

In einer weiteren bevorzugten Ausführungsform der erfindungsgemäßen Verspannvorrichtung sind die Kegelsegmente derart geformt, dass die Verspannvorrichtung im zusammengesetztem Zustand mindestens einen Schlitz ausbildet, der schraubenförmig die axiale Ausnehmung zur Aufnahme eines Verspannmittels umläuft, so dass bei einem Zusammenpressen des konischen Bereichs eine Kerbwirkung auf das Verspannmittel verringert wird. Dies ist ein Vorteil, weil ein starkes Eindrücken einer Verspannhülse entlang der Längsachse eines Verspannmittels das Verspannmittel strukturell schädigen kann. Insbesondere kann dies eintreten, wenn als Verspannmittel glasfaserverstärkte Kunststoff-Stäbe (GFK-Stäbe) eingesetzt werden, deren Fasern durch eine starke Einkerbung beim Anpressen der Hülse aufgetrennt werden. Die Verspannvorrichtung ist also so geformt, dass ihre Mittellinie nicht genau der Mittellinie der GfK-Stäbe folgt. Diese leichte Verdrehung der Stücke bzw. Kegelsegmente bewirkt, dass die Kerbwirkung auf den Stab nicht genau in Richtung der Glasfasern im Stab ausgerichtet ist. Hierdurch wird die Kerbwirkung reduziert.

In einer weiteren bevorzugten Ausführungsform der erfindungsgemäßen Verspannvorrichtung sind drei Stücke vorgesehen, die in Bezug auf die axiale Ausnehmung zur Aufnahme eines Verspannmittels im Wesentlichen winkelsymmtrische Kegelsegmente ausbilden. Dies ist ein Vorteil, weil auf diese Weise besonders einfach eine erfindungsgemäße mehrstückige Verspannvorrichtung zusammengesetzt werden kann.

Ausgehend von bekannten Ansätzen zum Verspannen von Stäben für Überspannungsableiter in Käfig-Bauweise stellt sich ferner an die Erfindung die Aufgabe, ein Herstellungsverfahren anzugeben, mit dem ein Überspannungsableiter besonders leicht zu montieren ist.

Die Erfindung löst diese Aufgabe durch ein Herstellungsverfahren nach Anspruch 14. Es ergeben sich sinngemäß die gleichen Vorteile wie eingangs für die erfindungsgemäße Verspannvorrichtung erläutert.

Ausgehend von bekannten Ansätzen zum Verspannen von Stäben für Überspannungsableiter in Käfig-Bauweise stellt sich ferner an die Erfindung die Aufgabe, einen Überspannungsableiter anzugeben, der besonders leicht zu montieren ist.

Die Erfindung löst diese Aufgabe durch einen Überspannungsableiter nach Anspruch 15. Es ergeben sich sinngemäß die gleichen Vorteile wie eingangs für die erfindungsgemäße Verspannvorrichtung erläutert.

In einer bevorzugten Ausführungsform des erfindungsgemäßen Überspannungsableiters ist die Gleitschicht durch Einbringung von Teflon in die im Wesentlichen passgenau geformte Ausnehmungen der Endarmatur ausgebildet. Es kann beispielsweise eine Beschichtung der Innenfläche der Ausnehmungen mit Teflon erfolgen.

In einer anderen bevorzugten Ausführungsform des erfindungsgemäßen Überspannungsableiters ist das Verspannmittel ein Stab.

In einer weiteren bevorzugten Ausführungsform des erfindungsgemäßen Überspannungsableiters ist der Stab zumindest anteilig aus einem glasfaserverstärkten Kunststoff gebildet.

Zur besseren Erläuterung der Erfindung zeigen in schematischer Darstellung die
- Figur 1: zwei Stücke einer dreistückigen Verspannvorrichtung nach einem ersten Ausführungsbeispiel der Erfindung, und
- Figur 2: eine zusammengesetzte Verspannvorrichtung mit drei Stücken, und
- Figur 3: die Verspannvorrichtung gemäß Figur 2 beim Umwickeln mit einem Teflonband, und
- Figur 4: die Verspannvorrichtung gemäß Figur 3 mit Gleitschicht aus Teflonband, und
- Figur 5: eine Draufsicht auf eine Endarmatur, in der mehrere Verspannmittel mittels Verspannvorrichtungen festgelegt sind.

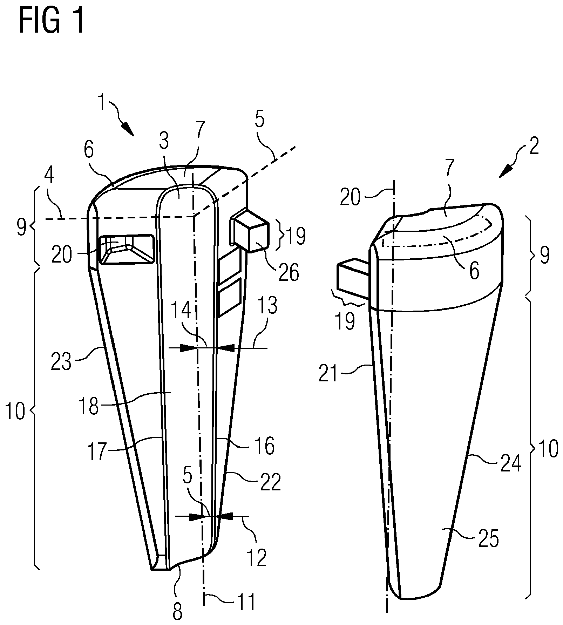

Die Figur 1 zeigt zwei Stücke 1, 2 einer dreistückigen Verspannvorrichtung nach einem ersten Ausführungsbeispiel der Erfindung. Beide Stücke 1, 2 sind im Wesentlichen als Kegelstumpfsegmente ausgebildet. Im linken Teil der Abbildung ist das erste Segment 1 derart geformt, dass an einem Ende des Segments 1 ein erster Bereich 9 ausgebildet ist, der im Wesentlichen die Form eines Zylinders mit entsprechend nichtgewölbter Außenkante 50 aufweist. Die Außenkante 50 verläuft z.B. parallel zu einer Längsachse 11.

Ferner ist der erste Bereich 9 derart geformt, dass sich bei einer Draufsicht auf das Segment 1 zwischen den Achsen 4 und 5 ein Winkel 3 von 120° ausbildet. Auf diese Weise bilden drei zusammengelegte Kegelsegmente einen komplett zylinderförmigen ersten Bereich 9 für die eine fertig vormontierte Verspannvorrichtung aus. Am Ende des ersten Bereichs 9 ist das Ende 7 als eine flache Oberfläche mit zu den Seitenflächen hin abgerundeten Kanten 6,51 ausgebildet.

An den ersten Bereich 9 schließt sich ein zweiter Bereich 10 an, der in ein zweites Ende 8 mündet. In diesem Bereich 10 ist die Verspannhülse beziehungsweise das vorliegende Kegelsegment 1 konisch geformt, d.h. dass nach Art eines Kegelstumpfes die Außenkanten 21,22,23,24 nach innen zulaufend sind, so dass im Querschnitt eine Keilform ausgebildet ist. Es ist entlang der Längsachse 11 sowohl im ersten Bereich 9 als auch im zweiten Bereich 10 eine axiale Ausnehmung 3 zur Aufnahme eines Verspannmittels vorgesehen. Diese axiale Ausnehmung 3 ist derart beschaffen, dass im zusammengesetzten Zustand von drei Kegelsegmenten ein im Wesentlichen zylinderförmiger Hohlraum für die Aufnahme eines glasfaserverstärkten Kunststoffstabes als Verspannmittel ausgebildet wird.

In dem Kegelsegment 1 wird die axiale Ausnehmung 3 seitlich durch die Schnittkanten 17 und 16 begrenzt. Ferner ist die axiale Ausnehmung 3 so beschaffen, dass sie im zusammengesetzten Zustand der Kegelsegmente eine leicht schraubenförmig um den eingefügten Stab umlaufende Anpressfläche hat. Mit anderen Worten laufen die zwischen den drei Segmenten ausgebildeten drei Schlitze leicht schraubenförmig um den Glasfaserstab herum und bewirken dadurch eine verringerte Kerbwirkung. Hierdurch wird eine Einkerbung und damit strukturelle Schwächung entlang der Glasfasern des Stabes vermindert und damit die Stabilität erhöht. Erkennbar ist diese leicht asymmetrische Ausführung der axialen Ausnehmung 3 in der Figur 1 durch die Hilfsachsen 12, 13. Die Hilfsachsen 12, 13 schneiden die Längsachse 11 und bilden dabei im Bereich der Hilfsachse 12 den Abstand 5 und im Bereich der Hilfsachse 13 den Abstand 14 aus, der wesentlich größer als der Abstand 5 ist.

Der erste Bereich 9 weist ein erstes Befestigungsmittel 19 auf. Das erste Befestigungsmittel 19 ist als eine Art Pin- oder Stiftkontakt ausgebildet, wobei eine quadratische Grundfläche und ein keilförmig geneigter Endbereich 26 vorgesehen sind. Das erste Befestigungsmittel 19 ist zur Einführung in eine dafür vorgesehene Ausnehmung im Kegelsegment 2 vorgesehen.

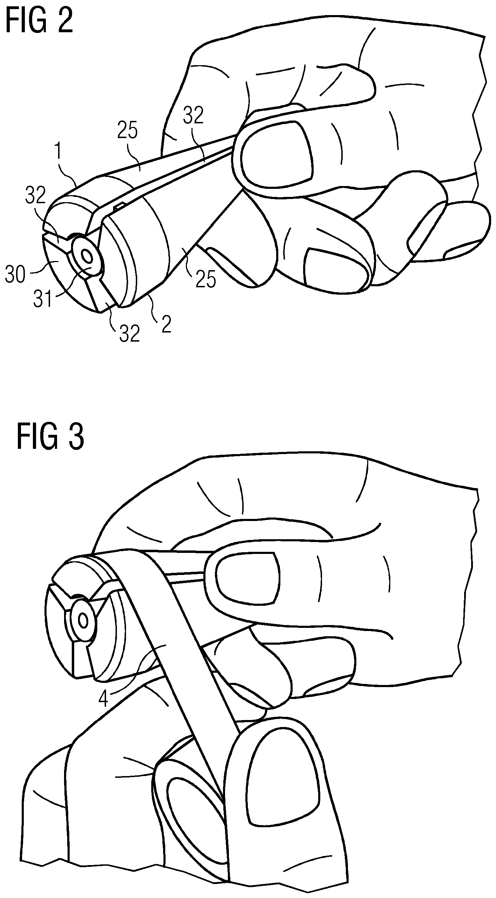

Auch das Kegelsegment 2 weist ein erstes Befestigungsmittel 19 im ersten Bereich 9 auf, das zur Einführung in ein zweites Befestigungsmittel 20 des in Figur 2 dargestellten dritten Kegelsegments 30 vorgesehen ist. Das zweite Befestigungsmittel 20 ist als Ausnehmung derart geformt, dass der Pin 19 eines korrespondierenden Kegelsegments leichtgängig eingefügt werden kann, so dass ein Verrutschen der Kegelsegmente gegeneinander in Längsrichtung verhindert wird.

Das zweite Kegelsegment 2 weist eine axiale Ausnehmung entlang der Längsachse 20 auf, wobei die schraubenförmige Verdrehung der Seitenlinie 21 und der Seitenlinie 24 des konisch gewölbten Außenbereichs 25 erkennbar ist.

Die Figur 2 zeigt eine zusammengesetzte Verspannvorrichtung mit drei Stücken 1, 2, 30. Die Stücke 1, 2, 30 sind im Wesentlichen als Kegelsegmente ausgebildet, die mittels Ineinandergreifen von ersten und zweiten Befestigungsmitteln (nicht dargestellt) in Längsrichtung rutschfest fixiert sind. Die drei Stücke bilden eine axiale Ausnehmung zur Aufnahme eines Verspannmittels aus, wobei als Montagehilfe eine Haltevorrichtung 31 - ein runder Metallstab - anstatt des Verspannmittels in die Ausnehmung eingeführt ist. Hierdurch kommen die drei Segmente 1, 2, 30 derart zu liegen, dass sich zwischen ihnen drei Schlitze 32 ausbilden. Gut erkennbar ist weiterhin die konisch zulaufende Außenfläche 25.

Die Figur 3 zeigt die Verspannvorrichtung gemäß Figur 2, die zur Vorbereitung der Ableitermontage mit einem Teflonband 40 auf der Außenfläche umwickelt wird. Das Teflonband 40 bildet durch Umwickeln des ersten und zweiten Bereichs 9,10 eine dünne Gleitschicht auf der Verspannvorrichtung aus.

Die Figur 2 zeigt eine vorbereite Verspannvorrichtung mit Segmenten 1, 2. Es ist eine vollständige Gleitschicht 41 durch das Teflonband ausgebildet, die auch den Spalt 32 zwischen den Segmenten 1, 2 überspannt. Wird nun die Montagehilfe entfernt, so kann diese vorbereitete Verspannhülse beziehungsweise Verspannvorrichtung 41 auf einen GFK-Stab als Verspannmittel aufgeschoben und in eine passgenau ausgeformte Öffnung in einer Endarmatur eingelegt werden.

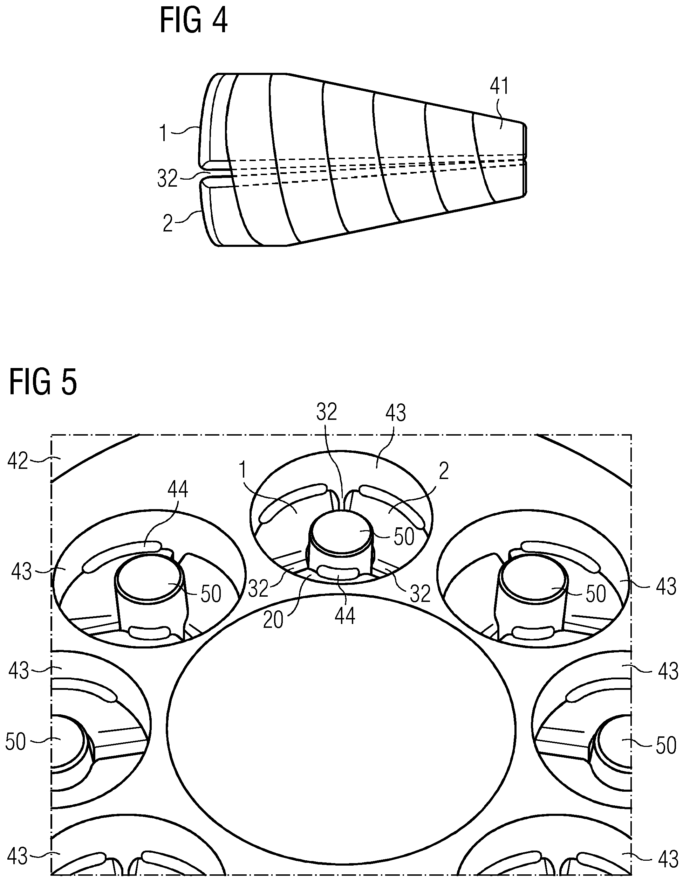

Die Figur 5 zeigt eine Draufsicht auf eine Endarmatur 42, in der mehrere Verspannmittel 50 mittels Verspannvorrichtungen festgelegt sind. Die Endarmatur weist hierfür Vorbohrungen 43 auf, in die die Verspannvorrichtungen 1, 2, 30 eingelegt sind. Auf den Verspannmitteln 50 beziehungsweise Stäben ist durch einen schwarzen Strich eine Markierung 44 vorgenommen. Weiterhin ist die Lage der einzelnen Segmente 1, 2, 30 der Verspannvorrichtung in der Öffnung 43 der Endarmatur markiert. Durch das Zusammenpressen des konischen Bereichs der Verspannvorrichtung in der passgenau ausgeformten Endarmatur wird der GFK-Stab 50 sicher festgelegt. Sollte dennoch ein Verrutschen auftreten, ist dieses leicht anhand der Markierungen erkennbar.

## Patentansprüche

1. Verspannvorrichtung (1,2,30) für einen Überspannungsableiter mit einer Endarmatur (42) und Verspannmitteln (50), aufweisend
eine axiale Ausnehmung (3) zur Aufnahme eines Verspannmittels (50), und
einen in axialer Richtung konisch zulaufenden Bereich (25) zur Einführung in eine im Wesentlichen passgenau geformte Ausnehmung (43) der Endarmatur (42),
wobei die Begrenzungswände (16,17) der Ausnehmung für das Verspannmittel (50) in dem konischen Bereich (25) zum Ausnehmungsinneren (18) hin beweglich sind, wobei die Verspannvorrichtung mehrstückig ausgebildet ist,
**dadurch gekennzeichnet, dass**
eine Gleitschicht (41) auf die Oberfläche des konischen Bereichs (25) aufgebracht ist, und die Stücke als Kegelsegmente (1,2) ausgebildet sind, die in zusammengesetztem Zustand die axiale Ausnehmung (3) zur Aufnahme eines Verspannmittels und mindestens einen Schlitz (32) in dem konischen Bereich ausbilden,
und der mindestens eine Schlitz (32) von der Außenfläche des konischen Bereichs (25) bis zur axialen Ausnehmung zur Aufnahme (3) eines Verspannmittels verläuft, und
der mindestens eine Schlitz (32) derart gestaltet ist, dass die Begrenzungswände (16,17) radial beweglich sind und jedes der Kegelsegmente (1,2) an seinem dem konisch verjüngten Bereich abgewandten Ende (9) jeweils mindestens ein erstes Befestigungsmittel (19) zur Verbindung mit einem benachbarten Kegelsegment (1,2) aufweist.

2. Verspannvorrichtung (1,2,30) nach Anspruch 1, **dadurch gekennzeichnet, dass** die Gleitschicht (41) zumindest anteilig Teflon als Material aufweist.

3. Verspannvorrichtung (1,2,30) nach Anspruch 2, **dadurch gekennzeichnet, dass** die Gleitschicht (41) durch Umwicklung des konischen Bereichs (25) mit einem Teflonband (40) ausgebildet ist.

4. Verspannvorrichtung (1,2,30) nach einem der Ansprüche 1 bis 3, **dadurch gekennzeichnet, dass** das erste Befestigungsmittel (19) jeweils als ein Vorsprung ausgebildet ist.

5. Verspannvorrichtung (1,2,30) nach einem der Ansprüche 1 bis 4, **dadurch gekennzeichnet, dass** bei jedem der Kegelsegmente (1,2) ein zweites Befestigungsmittel (20) vorgesehen ist, das als eine Ausnehmung zur Aufnahme eines ersten Befestigungsmittels (19) ausgebildet ist.

6. Verspannvorrichtung (1,2,30) nach einem der Ansprüche 1 bis 5, **dadurch gekennzeichnet, dass** die Kegelsegmente derart geformt sind, dass die Verspannvorrichtung (1,2,30) im zusammengesetztem Zustand mindestens einen Schlitz (32) ausbildet, der schraubenförmig die axiale Ausnehmung (3) zur Aufnahme eines Verspannmittels (50) umläuft, so dass bei einem Zusammenpressen des konischen Bereichs (25) eine Kerbwirkung auf das Verspannmittel (50) verringert wird.

7. Verspannvorrichtung (1,2,30) nach einem der Ansprüche 1 bis 6, **dadurch gekennzeichnet, dass** drei Stücke vorgesehen sind, die in Bezug auf die axiale Ausnehmung (3) zur Aufnahme eines Verspannmittels (50) im Wesentlichen winkelsymmtrische Kegelsegmente ausbilden.

8. Herstellungsverfahren für einen Überspannungsableiter, bei dem mehrere Verspannvorrichtungen nach einem der Ansprüche 1 bis 7 vorbereitet werden, indem eine Haltevorrichtung (31) in die axiale Ausnehmung (3) zur Aufnahme eines Verspannmittels (50) eingeführt wird und anschließend ein Teflonband (40) um zumindest den konischen Bereich (25) der jeweiligen Verspannvorrichtung (1,2,30) gewickelt wird, und
die Haltevorrichtung (31) jeweils von der vorbereiteten Verspannvorrichtung (1,2,30) entfernt wird, und
in die vorbereiteten Verspannvorrichtungen (1,2,30) jeweils ein Verspannmittel (50) eingelegt wird, und
die Verspannvorrichtungen mit den Verspannmitteln (50) in passgenau geformte Ausnehmungen (43) einer Endarmatur (42) eingelegt werden, und
die Verspannmittel (50) mittels der Verspannvorrichtungen durch Zug in der Endarmatur (42) festgelegt werden, so dass eine Ableitsäule mit Halbleiterwiderständen zwischen zwei Endarmaturen mittels eines Käfigs aus Stäben zusammengedrückt festgelegt wird.

9. Überspannungsableiter mit einer Ableitsäule, die mehrere Metalloxidwiederstände aufweist, und zwei Endarmaturen, zwischen den die Ableitsäule mittels mehrerer Verspannmittel (50) festgelegt ist, wobei jedes Verspannmittel (50) jeweils durch eine Verspannvorrichtung (1,2,30) gemäß einem der Ansprüche 1 bis 7 an einer der Endarmaturen befestigt ist.

10. Überspannungsableiter nach Anspruch 9, **dadurch gekennzeichnet, dass** das Verspannmittel (50) ein Stab ist.

11. Überspannungsableiter nach Anspruch 10, **dadurch gekennzeichnet, dass** der Stab zumindest anteilig aus einem glasfaserverstärkten Kunststoff besteht.

## Claims

1. Tensioning device (1, 2, 30) for a surge arrester, having an end fitting (42) and tensioning means (50), said tensioning device (1, 2, 30) having
an axial clearance (3) for receiving a tensioning means (50), and
a region (25) that in the axial direction tapers in a conical manner, for introducing into a clearance (43) of the end fitting (42) that is shaped so as to be of a substantially exact fit,
wherein the delimitation walls (16, 17) of the clearance for the tensioning means (50) in the conical region (25) are movable towards the clearance interior (18), wherein the tensioning device is configured in multiple parts, **characterized in that**
a friction layer (41) is applied to the surface of the conical region (25),
and the parts are configured as cone segments (1, 2) which in the assembled state in the conical region configure the axial clearance (3) for receiving a tensioning means and at least one slot (32),
and the at least one slot (32) runs from the external face of the conical region (25) up to the axial clearance for receiving (3) a tensioning means, and
the at least one slot (32) is designed in such a manner that the delimitation walls (16, 17) are movable in a radial manner and each of the cone segments (1, 2) on that end (9) thereof that faces away from the conically tapered region has in each case at least one first fastening means (19) for connecting to an adjacent cone segment (1, 2).

2. Tensioning device (1, 2, 30) according to Claim 1, **characterized in that** the friction layer (41) at least in proportions comprises Teflon as a material.

3. Tensioning device (1, 2, 30) according to Claim 2, **characterized in that** the friction layer (41) is configured by wrapping the conical region (25) with a Teflon tape (40).

4. Tensioning device (1, 2, 30) according to one of Claims 1 to 3, **characterized in that** the first fastening means (19) is in each case configured as a protrusion.

5. Tensioning device (1, 2, 30) according to one of Claims 1 to 4, **characterized in that** in the case of each of the cone segments (1, 2) one second fastening means (20) which is configured as a clearance for receiving a first fastening means (19) is provided.

6. Tensioning device (1, 2, 30) according to one of Claims 1 to 5, **characterized in that** the cone segments are shaped in such a manner that the tensioning device (1, 2, 30) in the assembled state configures at least one slot (32) which in the manner of a helix encircles the axial clearance (3) for receiving a tensioning means (50) such that a notching effect on the tensioning means (50) is reduced in the case of a compression of the conical region (25).

7. Tensioning device (1, 2, 30) according to one of Claims 1 to 6, **characterized in that** three parts which in relation to the axial clearance (3) for receiving a tensioning means (50) configure substantially angularly symmetrical cone segments are provided.

8. Production method for a surge arrester, in which production method a plurality of tensioning devices according to one of Claims 1 to 7 are prepared in that a holding device (31) is introduced into the axial clearance (3) for receiving a tensioning means (50) and subsequently a Teflon tape (40) is wrapped around at least the conical region (25) of the respective tensioning device (1, 2, 30), and
the holding device (31) is in each case removed from the prepared tensioning device (1, 2, 30), and
one tensioning means (50) is placed into each of the prepared tensioning devices (1, 2, 30), and
the tensioning devices conjointly with the tensioning means (50) are placed into clearances (43) of an exact fit of an end fitting (42), and
the tensioning means (50) by means of the tensioning devices are secured in the end fitting (42) by traction such that a discharge column having semiconductor resistors is secured in a compressed manner between two end fittings by means of a cage of rods.

9. Surge arrester having a discharge column which has a plurality of metal-oxide resistors, and two end fittings between which the discharge column is secured by means of a plurality of tensioning means (50), wherein each tensioning means (50) is in each case fastened to one of the end fittings by way of a tensioning device (1, 2, 30) according to one of Claims 1 to 7.

10. Surge arrester according to Claim 9, **characterized in that** the tensioning means (50) is a rod.

11. Surge arrester according to Claim 10, **characterized in that** the rod at least in proportions is composed of a glass-fibre-reinforced plastics material.

## Revendications

1. Système (1, 2, 30) de mise sous tension mécanique d'un parafoudre comprenant une armature (42) d'extrémité et des moyens (50) de mise sous tension mécanique, comportant
un évidement (3) axial de réception d'un moyen (50) de mise sous tension mécanique, et
une partie (25) s'étendant coniquement dans la direction axiale pour l'introduction dans un évidement (43), conformée d'une manière sensiblement exactement adaptée, de l'armature (42) d'extrémité, dans lequel les parois (16, 17) de délimitation de l'évidement pour le moyen (50) de mise sous tension mécanique dans la partie (25) conique sont mobiles vers l'intérieur (18) de l'évidement, dans lequel le système de mise sous tension mécanique est constitué en plusieurs pièces,
**caractérisé en ce que**
une couche (41) de glissement est déposée sur la surface de la partie (25) conique et les pièces sont constituées sous la forme de segments (1, 2) de cône, qui à l'état assemblé forment l'évidement (3) axial de réception d'un moyen de mise sous tension mécanique et au moins une fente (32) dans la partie conique,
et la au moins une fente (32) s'étend de la surface extérieure de la partie (25) conique jusqu'à l'évidement (3) axial de réception d'un moyen de mise sous tension mécanique, et
la au moins une fente (32) est conformée de manière à ce que les parois (16, 17) de limitation soient mobiles radialement et chacun des segments (1, 2) de cône a à son extrémité (9), loin de la partie se rétrécissant coniquement, respectivement au moins un premier moyen (19) de fixation pour la liaison à un segment (1, 2) de cône voisin.

2. Système (1, 2, 30) de mise sous tension mécanique suivant la revendication 1, **caractérisé en ce que** la couche (41) de glissement a au moins en partie du téflon comme matériau.

3. Système (1, 2, 30) de mise sous tension mécanique suivant la revendication 2, caractérisé en ce la couche (41) de glissement est constituée en enroulant une bande (40) de téflon autour de la partie (25) conique.

4. Système (1, 2, 30) de mise sous tension mécanique suivant l'une des revendications 1 à 3, caractérisé en ce le premier moyen (19) de fixation est constitué respectivement sous la forme d'une saillie.

5. Système (1, 2, 30) de mise sous tension mécanique suivant l'une des revendications 1 à 4, **caractérisé en ce que** pour chacun des segments (1, 2) de cône est prévu un deuxième moyen (20) de fixation, qui est constitué sous la forme d'un évidement de réception d'un premier moyen (19) de fixation.

6. Système (1, 2, 30) de mise sous tension mécanique suivant l'une des revendications 1 à 5, **caractérisé en ce que** les segments de cône sont conformés de manière à ce que le système (1, 2, 30) de mise sous tension mécanique forme à l'état assemblé au moins une fente (32), qui entoure hélicoïdalement l'évidement (3) axial de réception d'un moyen (50) de mise sous tension mécanique de manière à ce que, en comprimant la partie (25) conique, on diminue un effet d'entaille sur le moyen (50) de mise sous contrainte mécanique.

7. Système (1, 2, 30) de mise sous tension mécanique suivant l'une des revendications 1 à 6, **caractérisé en ce qu'**il est prévu trois pièces, qui constituent des segments de cône sensiblement à symétrie angulaire par rapport à l'évidement (3) axial de réception d'un moyen (50) de mise sous tension mécanique.

8. Procédé de fabrication d'un parafoudre, dans lequel on prépare plusieurs systèmes de mise sous tension mécanique suivant l'une des revendications 1 à 7, en introduisant un système (31) de maintien dans l'évidement (3) axial de réception d'un moyen (50) de mise sous tension mécanique et en enroulant ensuite une bande (40) de téflon autour d'au moins la partie (25) conique du système (1, 2, 30) respectif de mise sous tension mécanique, et
on retire le système (31) de maintien respectivement du système (1, 2, 30) de mise sous tension mécanique préparé, et
on insère dans les dispositifs (1, 2, 30) de mise sous tension mécanique préparés respectivement un moyen (50) de mise sous tension mécanique, et
on insère les dispositifs de mise sous tension mécanique avec les moyens (50) de mise sous tension mécanique dans des évidements (43) conformés de manière exactement adaptés d'une armature (42) d'extrémité, et
on fixe les moyens (50) de mise sous tension mécanique au moyen des systèmes de mise sous tension mécanique par traction dans l'armature (42) d'extrémité, de manière à ce qu'une colonne de décharge ayant des résistances à semi-conducteurs soit fixée en étant comprimée entre deux armatures d'extrémité au moyen d'une cage en barreaux.

9. Parafoudre ayant une colonne de décharge, qui a plusieurs résistances en oxyde métallique, et deux armatures d'extrémité entre lesquelles la colonne de décharge est fixée au moyen de plusieurs moyens (50) de mise sous tension mécanique, dans lequel chaque moyen (50) de mise sous tension mécanique est fixé respectivement par un système (1, 2, 30) de mise sous tension mécanique suivant l'une des revendications 1 à 7 à l'une des armatures d'extrémité.

10. Parafoudre suivant la revendication 9, **caractérisé en ce que** le moyen (50) de mise sous tension mécanique est un barreau.

11. Parafoudre suivant la revendication 10, **caractérisé en ce que** le barreau est au moins en partie en une matière plastique renforcée par de la fibre de verre.
